# EUROPEAN PATENT SPECIFICATION

(11) **EP 1 272 765 B1**
(45) Date of publication and mention of the grant of the patent: **11.03.2009**
(21) Application number: 01923738.7
(22) Date of filing: 21.03.2001
(51) Int. Cl.: F15B 11/072

(54) **A HYDRAULIC ARRANGEMENT AND A DAMPER ADAPTED THERETO**
HYDRAULISCHE ANORDNUNG UND DAZUGEHÖRIGER DÄMPFER
DISPOSITIF HYDRAULIQUE ET AMORTISSEUR ASSOCIE

(30) Priority: 21.03.2000 FI 20000656
(43) Date of publication of application: 08.01.2003
(73) Proprietor: Hydroll OY, 62101 Lapua (FI)
(72) Inventor: VILENIUS, Pertti, FIN-65100 Vaasa (FI)
(74) Representative: Nieminen, Taisto Tapani
(86) International application number: PCT/FI2001/000286
(87) International publication number: WO 2001/071197

(56) References cited:
- DE-U1- 29 713 825
- GB-A- 755 078
- GB-A- 2 080 419
- US-A- 5 009 068

## Description

The invention relates to a dampened hydraulic system as per the preamble of claim 1.

Previously known from the published application FI-970621 is a damper, where inside the cylinder there are two pistons so that in the space between the pistons a gas space for the damper and between the spaces of the cylinder ends in their turn spaces for the cylinder fluid. So it is then possible to damp two separate hydraulic circles with the damper. The damper is an independent unit adaptive to a hydraulic circle and needing piping. In a damper like this it is impossible to carry out gas pressure control, pressure rise or pressure relief while damper in operating conditions.

GB publication 2080419 discloses an adjustable stroke cylinder which have same structural features as mentioned in the preamble of the present invention. According to GB publication there liquid pressure medium is lead between slidable piston and on the piston rod connected piston. The stroke length is adjusted by means of auxiliary slidable piston. It is impossible to use the cylinder as a damper. US patent 5,009,068 discloses a pneumatic cylinder by means of which positioning, braking and feed rate control for the piston rod can be achieved. Neither this cylinder nor the cylinder in above referred GB publication are dampers by means of which two separate hydraulic system could be dampered.

In order to solve these problems a new damper and a hydraulic system adaptive to the damper have been developed. For the invention is characteristics what is presented in the characterizing parts of the claims 1 and 4. Moreover the advantageous embodiments for the invention has been presented in the depended claims.

The advantage of the invention is that a separate damper is not necessarily needed in connection with a linear motion cylinder, because the cylinder has an in-built damper muffling at least the motion in one direction. No piping needed as for a separate damper. The damper gas pressure can be controlled while damper in operating conditions and, if needed, the damper/cylinder can be furnished with a device detecting the piston rod position.

Damper/cylinder can be easily formed in a system with control, where the damped cylinder can be controlled according to its load, e.g. control the degree of control or, on the other hand, control the piston rod position instead of changing the load.

In the following the invention is disclosed with reference to the enclosed drawing, where,
- Fig. 1: shows a side view of the damper/cylinder partly cut.
- Fig. 2: shows a hydraulic system with control.
- Fig. 3: shows a cylinder, the motion of which in both direction is damped by a through piston rod solution.
- Fig. 4: shows a conventional cylinder damped in both directions.

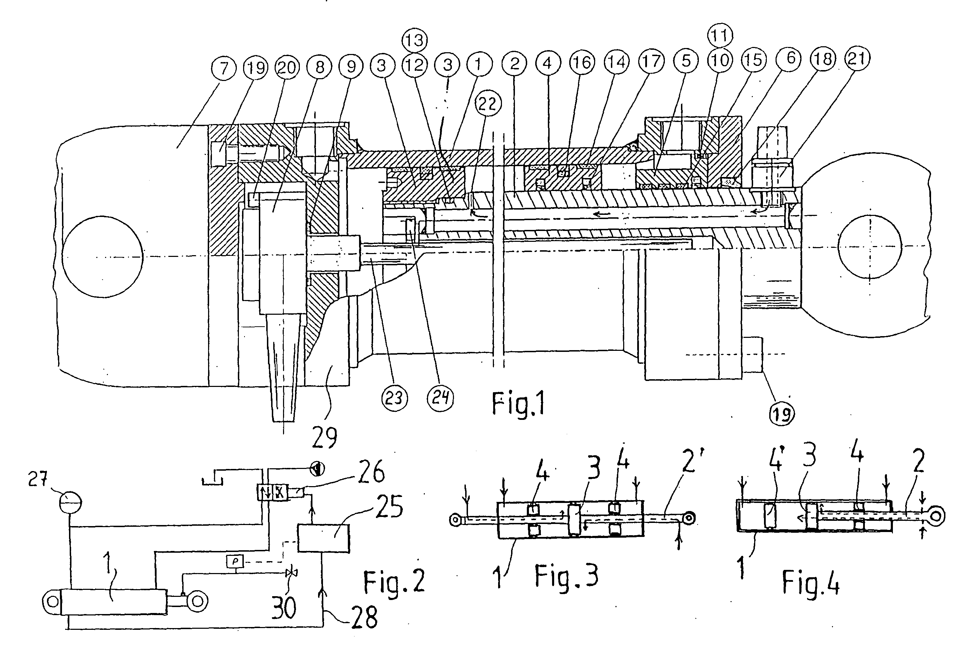

Figure 1 shows a cylinder 1, furnished with a first end piece 29 and a second end piece 6, inside of which cylinder there is a first piston 3 fixed to piston rod 2 and a second piston 4 which in regard to rod piston 2 can slide about it. Pistons 3, 4 and piston rod 2 have necessary sliding faces and packings 10 B 18. In piston rod a drill hole has been done, whereat there is from valve 21 in the rod base a connection along the drill hole to channel 22, whereat it is possible to fill, add or reduce gas in the space between pistons 3,4.

Further, there is in the centre of piston rod 2 a drill hole, into which the sensing element 23 of device 8 measuring the piston rod 2 position is placed. The sensing element 23 detects the position of element 24 moving along with piston rod 2 and, accordingly, the measuring device 8 can transmit to the control centre 25 (figure 2) information about piston rod 2 position.

So the cylinder of figure 1 is a double-acting cylinder making linear motion and working as damper at the same time. However, the gas space between pistons 3,4 damps only the shortening motion of the cylinder, whereat in order to produce damping for the lengthening motion a pressure accumulator 27 connected to the hydraulic fluid line, for instance, or a solution as per figure 4 is required.

In figure 2 a hydraulic system is illustrated, where a damper/cylinder as per figure 1 works as actuator. The system includes a control centre 25 receiving pressure information from the space between pistons 3,4 and along line 28 information about piston rod 2 position, possibly about accumulator 27 pressure and, for instance, information into which position piston rod 2 shall be steered. The control centre 25 shall have a control system, known per se, to control valve 26 in order to reach a required piston rod position and to steer the pressure of gas through valves 30 or 21 into the space between pistons or in accumulator 27.

The system can have been given the function to change the degree of damping which takes place in changing the gas pressure in accumulator 27 or in the space between pistons 3,4. Further, the control centre can have the function to retain the piston rod position in spite of the cylinder loading and its variations. Then the control centre mainly controls valve 26 in order to retain piston rod position. One application for the damper/cylinder is, for instance, implementation of suspension of a vehicle by means of the system as per figure 2. The system comprises then adjustment of ground clearance and as well as the "hardness" of suspension.

Thanks to the damper construction the gas pressure in the space between pistons 3 and 4 is can be, for instance, continually measured from the piping. Pressure can be increased or decreased, while piston rod yet moving, using a flexible pressure pipe between valve 30 and piston rod connection 21, for instance.

Figure 3 shows a cylinder 1 furnished with a through piston rod 2', a piston 3 fixed and pistons 4 sliding in regard to piston rod 2'. The device has a structural symmetry in regard to piston 3. The gas spaces are between pistons 3 and 4 and the hydraulic fluid is conveyed to spaces between cylinder ends and pistons 4. Connection to the gas spaces along channels is formed in the piston rod. The cylinder presented in figure 3 damps the motions in both directions. Most advantageously, in this case the sensor measuring the piston rod position shall be placed outside the cylinder.

In figure 4 there is a conventional cylinder damping in both directions. The first gas pressure space is formed between the first piston 3 and second piston 4. The second gas pressure space is formed between the first piston 3 and the second piston 4' moving freely in cylinder 1. There is a channel to both gas pressure spaces over piston rod 2. The first space of hydraulic fluid is between the end and piston 4, the second space of hydraulic fluid is between the end and piston 4'.

The invention is not restricted to the presented embodiment but many modifications are possible within the limits of the scope of the claims.

## Claims

1. dampened hydraulic system comprised of a cylinder (1), which has a first (29) and a second (6) end piece and a second cylinder space for second hydraulic inlet fluid, which space is bordered by the second end piece and second piston (4),(4'), the first piston (3) moving in the cylinder (1) and at least one second piston (4),(4') moving in the cylinder (1), whereat the first piston (3) is fixed to a piston rod (2),(2') and the second piston (4),(4') is arranged to slide in regard to said piston rod and the piston rod (2),(2') is sliding in regard to the end piece (6),(29) of the cylinder, and further a first cylinder space for first hydraulic inlet fluid, which space is bordered by the first end piece and either first piston (3) or second piston (4), **characterized in that** the space between the first piston (3) and the second piston (4),(4') is pressurized by gas over valve (21) and piston rod (2),(2') and the pressure of which can be controlled by a feeding line through said valve (21) and said piston rod (2) and that the system further includes a device (8,23,24) measuring position of said piston rod in regard to cylinder body (1) as well as a valve (26) controlled by steering unit (25) for conveyance of pressure fluid separately to the cylinder spaces between the first piston (3) and the end piece or the second piston (4),(4') and the end piece, either for maintaining the position of the first piston or changing the damping degree of the damper.

2. A system according to claim 1 **characterized in that** the gas pressure between the first piston (3) and the second piston (4) can be controlled, while the system is in operating conditions.

3. A system according to claim 1 or 2 **characterized in that** in the hydraulic fluid running to the cylinder space and bordered by the first piston (3) there is an accumulator (27) working as a damper.

4. A system according to claim 1 comprising of a linear motion working cylinder (1), where the working cylinder comprises one first piston (3) fixed to a piston rod (2),(2') and one or more second pistons (4),(4') arranged to be sliding in regard to said piston rod (2),(2') and one first cylinder space for the hydraulic fluid between the first piston (3) or second piston (4),(4') and a first end piece (29) and, correspondingly, one second cylinder space for second hydraulic fluid between the second piston (4) and end piece (6), **characterized in that** the damping is made of the first piston (3) fixed to the rod and the second piston (4) and the system comprises a gas space formed between the first piston (3) and the second piston (4) and the pressure of which can be controlled by means of a feeding line through a valve (21) and the piston rod (2), further a device (8) measuring the position of said piston rod (2), the status data of which is transmitted to a steering unit (25), a valve (26) controlled by steering unit (25) for conveyance of pressure fluid separately to the cylinder spaces between the first piston (3) and the end piece or the second piston (4),(4) and the end piece, either for maintaining the position of the first piston or changing the damping degree of the system.

5. A system according to claim 4 **characterized in that** valve (26) is regulated by control unit (25) according to piston rod (2) status data.

6. A system according to claim 4 or 5 **characterized in that** the gas pressure in the space between the first piston (3) and the second piston (4),(4') is regulated by control unit (25) according to piston rod (2) status data.

7. A system according to any of the previous claims 4 - 6 **characterized in that** the pressure of accumulator (27) is regulated by control unit (25).

8. A system according to any of the previous claims 4 - 7 **characterized in that** the system comprises transmission of pressure data from the space between the first piston (3) and the second piston (4),(4') to control unit (25).

## Patentansprüche

1. Ein gedämpftes hydraulisches Verfahren, das einen Zylinder (1), der ein erstes (29) und ein zweites (6) Endstück und einen zweiten Zylinderraum für die zweite, hydraulische Einlassflüssigkeit hat, welcher Raum vom zweiten Endstück und vom zweiten Kolben (4), (4') gegrenzt ist, aufweist, während der erste Kolben (3) im Zylinder (1) rührt und während mindestens ein zweiter Kolben (4), (4') im Zylinder (1) rührt, wobei der erste Kolben (3) am Kolbenschaft (2), (2') befestigt ist und der zweite Kolben (4), (4') so organisiert ist, dass er in Bezug auf den genannten Kolbenschaft gleitet und der Kolbenschaft (2), (2') gleitet in Bezug auf auf das Endstück (6), (29) des Zylinders und weist weiter einen ersten Zylinderraum für die erste, hydraulische Einlassflüssigkeit auf, welcher Raum vom ersten Endstück und entweder vom ersten Kolben (3) oder dem zweiten Kolben (4) gegrenzt ist, **dadurch gekennzeichnet, dass** der Raum der sich zwischen dem ersten Kolben (3) und dem zweiten Kolben (4), (4') befindet vom Gasventil (21) und vom Kolbenschaft (2), (2') unter Druck gesetzt ist und der Druck von welchem Raum mit einer Zufuhrlinie durch das obengenannte Ventil (21) und durch den obengenannten Kolbenschaft (2) geregelt werden kann und dass der Verfahren weiter ein Gerät (8, 23, 24) aufweist, das die Position des obengenannten Kolbenschaftes in Bezug auf den Stamm des Zylinders (1) messt sowie ein Ventil (26), das mit einer Steuerungseinheit (25) geregelt wird, aufweist um die Druck-flüssigkeit zu leiten getrennt zur Zylinderräume, die sich zwischen dem ersten Kolben (3) und dem Endstück oder zwischen dem zweiten Kolben (4), (4') und dem Endstück befinden, entweder zum Beibehalten von der Position des ersten Kolbens oder zum Verändern vom Dämpfungsgrad des Dämpfers.

2. Verfahren nach Anspruch 1, **dadurch gekennzeichnet, dass** der Gasdruck zwischen dem ersten Kolben (3) und dem zweiten Kolben (4) geregelt werden kann, während das Verfahren im Betriebszustand ist.

3. Verfahren nach Anspruch 1 oder 2 **dadurch gekennzeichnet, dass** es einen Akkumulator (27) gibt, der als Dämpfer in der hydraulischen Flüssigkeit, die in den Zylinderraum fliesst und die von dem ersten Kolben (3) gegrenzt ist, funktioniert.

4. Verfahren nach Anspruch 1, das einen Zylinder (1), der in linearer Bewegung funktioniert, aufweist, worin der funktionierende Zylinder einen ersten Kolben (3), der an einem Kolbenschaft (2), (2') befestigt ist und einen zweiten Kolben oder mehrere Kolben (4), (4'), die als gleitend organisiert sind in Bezug auf den obengenannten Kolbenschaft (2), (2') und einen ersten Zylinderraum für die hydraulische Flüssigkeit, die sich zwischen dem ersten Kolben (3) oder dem zweiten Kolben (4), (4') befindet und ein erstes Endstück (29) und - dementsprechend - einen zweiten Zylinderraum für die zweite, hyraulische Flüssigkeit, die sich zwischen dem zweiten Kolben (4) und dem Endstück (6) befindet, aufweist **dadurch gekennzeichnet, dass** die Dämpfung vom ersten Kolben (3), der am Schaft befestigt ist und vom zweiten Kolben (4) hergestellt ist und das Verfahren weist einen Gasraum, der zwischen dem ersten Kolben (3) und dem zweiten Kolben (4) angeordet ist, auf und der Druck von welchem mit Hilfe von einer Zufuhrlinie durch das Ventil (21) und durch den Kolbenschaft (2) geregelt werden kann, weiter weist das Verfahren ein Gerät (8) auf, das die Position des obengenannten Kolbenschafts (2) messt, die Statusdaten von welchem zur Steuerungseinheit (25) übertragen werden, das Verfahren weist ein Ventil (26) auf, das von der Steuerungseinheit (25) geregelt wird zur Lieferung von der Druckflüssigkeit getrennt zur Zylinderräume, die sich zwischen dem ersten Kolben (3) und dem Endstück oder zwischen dem zweiten Kolben (4), (4) und dem Endstück befinden entweder zum Beibehalten von der Position des ersten Kolbens oder zum Verändern vom Dämpfungsgrad des Verfahrens.

5. Verfahren nach Anspruch 4, **dadurch gekennzeichnet, dass** das Ventil (26) mit einer Steuereinheit (25) nach Statusdaten des Kolbenschaftes (2) geregelt ist.

6. Verfahren nach Anspruch 4 oder 5, **dadurch gekennzeichnet, dass** der Gasdruck der sich im Raum zwischen dem ersten Kolben (3) und dem zweiten Kolben (4), (4') befindet, mit einer Steuereinheit (25) nach Statusdaten des Kolbenschaftes (2) geregelt ist.

7. Verfahren nach einem der obengenannten Ansprüche 4 bis 6, **dadurch gekennzeichnet, dass** der Druck des Akkumulators (27) mit einer Steuereinheit (25) geregelt ist.

8. Verfahren nach einem der obengenannten Ansprüche 4 bis 7, **dadurch gekennzeichnet, dass** das Verfahren Übertragung der Druckdaten zur Steuereinheit (25) aufweist vom Raum, der sich zwischen dem ersten Kolben (3) und dem zweiten Kolben (4), (4') befindet.

## Revendications

1. Un système hydraulique avec atténuateur comprenant un cylindre (1), muni d'une première (29) et d'une seconde (6) pièce terminale ainsi qu'un second espace cylindre pour la seconde admission du fluide hydraulique, cet espace se limitant à la seconde pièce terminale et au second piston (4), (4'), le premier piston (3) se déplaçant dans le cylindre (1) et un second piston (4), (4') au moins se déplaçant dans le cylindre (1), le premier piston (3) étant fixé sur une tige de piston (2), (2') et le second piston (4), (4') étant disposé de façon à glisser en regard de ladite tige de piston, et la tige de piston (2), (2') glisse en regard de la pièce terminale (6), (29) du cylindre, et encore un premier espace cylindre pour la première admission du fluide hydraulique, cet espace étant limité par la première pièce terminale et soit par le premier piston (3), soit par le second piston (4), **caractérisé en ce que** l'espace entre le premier piston (3) et le second piston (4) est mis en pression par une vanne (21) et par une tige de piston (2), (2'), et **en ce que** la pression en peut être contrôlée par une ligne d'alimentation à travers ladite vanne (21) et ladite tige de piston (2), et **en ce que** système comprend encore un dispositif (8, 23, 24) mesurant la position de ladite tige de piston en regard du corps du cylindre (1) ainsi qu'une vanne (26) commandée par une unité de commande (25) pour la transmission du fluide sous pression séparément dans les espaces cylindres entre le premier piston (3) et la pièce terminale ou le second piston (4), (4') et la pièce terminale, soit pour maintenir la position du premier piston ou pour changer le degré d'atténuation de l'atténuateur.

2. Un système selon la revendication 1, **caractérisé en ce que** la pression du gaz entre le premier piston (3) et le second piston (4) peut être contrôlée lorsque le système est en régime de marche.

3. Un système selon la revendication 1 ou 2, **caractérisé en ce que,** dans la ligne de fluide hydraulique allant vers l'espace cylindre limité par le premier piston (3), il y a un accumulateur (27) fonctionnant comme atténuateur.

4. Un système selon la revendication 1 comprenant un cylindre de travail effectuant un mouvement linéaire, dans lequel le cylindre de travail comprend un premier piston (3) fixé sur une tige de piston (2), (2') et un second piston (4), (4') (ou plusieurs) disposé de façon à glisser en regard de ladite tige de piston (2), (2') et un premier espace cylindre pour le fluide hydraulique entre le premier piston (3) ou le second piston (4), (4') et la première pièce terminale (29), ainsi que, de façon correspondante, un second espace cylindre pour le second fluide hydraulique entre le second piston (4) et la pièce terminale (6), **caractérisé en ce que** l'atténuation est effectuée par le premier piston (3) fixé sur la tige et le second piston (4) et **en ce que** le système comprend un espace de gaz formé entre le premier

5. piston (3) et le second piston (4) et en ce que la pression en peut être contrôlée au moyen d'une ligne d'alimentation à travers la vanne (21) et la tige de piston (2), et encore un dispositif (8) mesurant la position de ladite tige de piston (2), dont les données d'état sont transmises à une unité de commande (25), une vanne (26) commandée par l'unité de commande (25) pour la transmission du fluide sous pression aux espaces cylindres entre le premier piston (3) et la pièce terminale ou le second piston (4), (4') et la pièce terminale, soit pour maintenir la position du premier piston ou pour changer le degré d'atténuation de l'atténuateur.

6. Un système selon la revendication 4, **caractérisé en ce que** la vanne (26) est régulée par l'unité de commande (25) selon les données d'état transmises par la tige de piston (2).

7. Un système selon la revendication 4 ou 5, **caractérisé en ce que** la pression de gaz dans l'espace entre le premier piston (3) et le second piston (4), (4') est régulée par l'unité de commande (25) selon les données d'état transmises par la tige de piston (2).

8. Un système selon l'une quelconque des revendications 4 à 6, **caractérisé en ce que** la pression de l'accumulateur (27) est régulée par l'unité de commande (25).

9. Un système selon l'une quelconque des revendications 4 à 7, **caractérisé en ce que** le système comprend la transmission des données de pression de l'espace entre le premier piston (3) et le second piston (4), (4') vers l'unité de commande (25).
